# EUROPEAN PATENT APPLICATION

(11) **EP 4 462 572 A1**
(43) Date of publication of application: **13.11.2024**
(21) Application number: 22939656.9
(22) Date of filing: 18.07.2022
(51) Int. Cl.: H01M 50/289

(54) **BATTERY BOX BODY STRUCTURE, BATTERY CELL AND BATTERY PACK**

(30) Priority: 28.04.2022 CN 202210471242
(71) Applicant: Battero Tech Corporation Limited, Shanghai 201400 (CN)
(72) Inventor: LIU, Yong, Shanghai 201400 (CN)
(74) Representative: HGF
(86) International application number: PCT/CN2022/106292
(87) International publication number: WO 2023/206828

(57) **Abstract**

Embodiments of the present invention provide a battery box assembly, a cell, and a battery pack, and belong to the technical field of batteries. The battery box assembly includes a box body and a separator, wherein the box body has an accommodating space, and the separator is arranged in the accommodating space; the separator is configured to divide the accommodating space into a first region and a second region; a vent hole is provided in the separator, and the vent hole is configured to connect the first region to the second region; the first region is configured to mount a cell; and the vent hole is arranged in a position corresponding to an explosion-proof valve of the cell, the vent hole is configured to guide gas and liquid flows flowing from the explosion-proof valve to the second region in a case where the explosion-proof valve of the cell is opened. By means of the embodiments, thermal diffusion occurring in a battery pack is delayed or improved.

## Description

### Cross-Reference to Related Application

The present invention claims priority to Chinese Patent Application No. 2022104712423, filed to the China National Intellectual Property Administration on April, 28, 2022 and entitled "Battery box assembly, Cell, and Battery Pack", the invention of which is hereby incorporated by reference in its entirety.

### Technical Field

The present invention relates to the technical field of secondary batteries, and in particular to a battery box assembly, a cell, and a battery pack.

### Background

An existing battery pack includes a plurality of cells, each of the cells includes an explosion-proof valve, a battery cell pole, and an insulating layer. If thermal runaway occurs in the cell, the explosion-proof valve of the cell is opened, and high-temperature airflow and high-temperature liquid sprayed out from the explosion-proof valve may cause damage to the battery cell pole and the insulating layer, and affect the adjacent cells, thereby causing thermal diffusion.

### Summary

Some embodiments of the present invention provide a battery box assembly, a cell, and a battery pack, which can avoid damage of high-temperature airflow and high-temperature liquid to an insulating layer and a cell pole of a cell in a case where thermal runaway occurs in some cells, avoid affecting other cells, and alleviate thermal diffusion.

Embodiments of the present invention may be implemented as follows.

In a first aspect, some embodiments of the present invention provide a battery box assembly, configured to accommodate a cell. The battery box assembly includes a box body and a separator. The box body has an accommodating space, and the separator is arranged in the accommodating space. The separator divides the accommodating space into a first region and a second region. A vent hole is provided in the separator, and the vent hole is configured to connect the first region to the second region. The first region is configured to mount a cell. The vent hole is arranged in a position corresponding to an explosion-proof valve of the cell, the vent hole is configured to guide gas and liquid flowing from the explosion-proof valve to the second region in a case where the explosion-proof valve of the cell is opened.

In an optional implementation, the first region is located above the second region.

In an optional implementation, the battery box assembly further includes a sealing heat insulation piece. The sealing heat insulation piece is arranged on a side, located in the first region, of the separator, and is arranged on an outer periphery of the vent hole, and the sealing heat insulation piece is configured for sealing and heat insulation between the separator and the cell.

In an optional implementation, a thickness of the sealing heat insulation piece is greater than a gap between the separator and the cell.

In an optional implementation, the battery box assembly further includes an explosion-proof balance assembly. The explosion-proof balance assembly is arranged in the box body, the explosion-proof balance assembly connects to the second region, and the explosion-proof balance assembly is configured to balance the pressure of the second region.

In an optional implementation, the first region is located above the second region, a side wall of the box body is provided with an airflow channel connecting to the second region, and the explosion-proof balance assembly connects to the second region through the airflow channel.

The explosion-proof balance assembly is arranged on a side wall of the box body corresponding to the second region. And/or, the explosion-proof balance assembly is arranged on a side wall of the box body corresponding to the first region.

In an optional implementation, a groove recessed in a direction toward the second region is provided in a side, close to the first region, of the separator, and the vent hole is arranged at a bottom of the groove. Or, a boss protrudes out of a side, close to the first region, of the separator, and the vent hole is formed in a top wall of the boss.

In an optional implementation, the battery box assembly further includes a first cold plate. The first cold plate is arranged on a side, close to the second region, of the separator, the first cold plate is configured to cool the first region and the second region, and a through hole corresponding to the vent hole is provided in the first cold plate.

In an optional implementation, the first cold plate is provided with a flow channel groove, and the first cold plate is partially attached to the separator, so that the flow channel groove forms a cooling flow path.

In an optional implementation, a water inlet and a water outlet which connect to the cooling flow path are provided in the first cold plate and/or the separator.

In an optional implementation, the first cold plate and the separator are integrally formed.

In an optional implementation, a surface of the first cold plate is provided with a fireproof coating.

In an optional implementation, the box body includes a bottom protection plate. The bottom protection plate and the separator are oppositely arranged, and the second region is formed between the bottom protection plate and the separator. A surface of the bottom protection plate is provided with a fireproof coating.

In an optional implementation, an insulating heat conduction piece is arranged between the separator and the cell.

In an optional implementation, the battery box assembly further includes a second cold plate. The second cold plate is arranged in the first region, and the second cold plate is configured to cool the side, away from the separator, of the cell.

In an optional implementation, a heat conduction piece is arranged between the second cold plate and the cell.

In a second aspect, some embodiments of the present invention provide a cell, applied to the battery box assembly according to any one of the foregoing implementations. The cell includes a cell body and an explosion-proof valve. The cell body is provided with a mounting part, the explosion-proof valve is mounted on the mounting part, the mounting part and/or the explosion-proof valve protrude/protrudes out of the cell body, and a part of the mounting part and/or the explosion-proof valve protruding out of the cell body is configured to be inserted into a vent hole.

In a third aspect, some embodiments of the present invention provide a battery pack, including the battery box assembly according to any one of the foregoing implementations and/or the cell according to the foregoing implementation.

The battery box assembly, the cell, and the battery pack provided by the embodiments of the present invention have, for example, the following beneficial effects.

In the present invention, the separator is arranged in the accommodating space of the box body, the accommodating space is divided into the first region and the second region which are independent of each other by using the separator, the vent hole is provided in the separator, and after the cell is mounted in the first region, the explosion-proof valve of the cell corresponds to the vent hole, so that gas and liquid flows flowing from the explosion-proof valve are guided to the second region through the vent hole in a case where thermal runaway occurs in the cell and the explosion-proof valve of the cell is opened, and the high-temperature airflow and the high-temperature liquid are isolated from the first region, thereby improving or avoiding damage and influence of the high-temperature airflow and the high-temperature liquid on the cell arranged in the first region and insulation design in the first region thereof.

### Brief Description of the Drawings

In order to more clearly illustrate the embodiments of the present invention, the drawings used in the embodiments will be briefly described below. It is to be understood that the following drawings are only some embodiments of the present invention and should not be regarded as a limitation of the scope. Other related drawings may further be obtained by those of ordinary skill in the art according to these drawings without creative efforts.
Fig. 1 is a schematic structural diagram of a battery pack structure according to an embodiment of the present invention.
Fig. 2 is a schematic cross-sectional view of a battery pack according to an embodiment of the present invention.
Fig. 3 is a schematic enlarged view of a position A in Fig. 2.
Fig. 4 is a structural exploded view of a battery pack according to an embodiment of the present invention.
Fig. 5 is a schematic diagram of mounting a separator of a battery box assembly according to an embodiment of the present invention.
Fig. 6 is a partial exploded view of a sealing heat insulation piece and a separator of a battery box assembly according to an embodiment of the present invention.
Fig. 7 is a schematic structural diagram of a separator of a battery box assembly according to an embodiment of the present invention.
Fig. 8 is a schematic diagram of a decomposition structure of a battery box assembly according to an embodiment of the present invention.
Fig. 9 is another schematic structural diagram of a separator of a battery box assembly according to an embodiment of the present invention.
Fig. 10 is a partial schematic structural diagram of a second region of a battery box assembly according to an embodiment of the present invention.
Fig. 11 is a structure of a cell available for a battery box assembly according to an embodiment of the present invention.
Fig. 12 is a second structure of a cell available for a battery box assembly according to an embodiment of the present invention.
Fig. 13 is a third structure of a cell available for a battery box assembly according to an embodiment of the present invention.
Fig. 14 is a fourth structure of a cell available for a battery box assembly according to an embodiment of the present invention.
Fig. 15 is a fifth structure of a cell available for a battery box assembly according to an embodiment of the present invention.
Fig. 16 is a sixth structure of a cell available for a battery box assembly according to an embodiment of the present invention.

Reference signs: 100-battery box assembly; 110-box body; 101-side wall; 111-accommodating space; 113-first region; 115-second region; 116-airflow channel; 117-frame; 118-sealing piece; 119-bottom protection plate; 120-fixing plate; 121-mounting hole; 123-fixing piece; 130-separator; 131-vent hole; 133-groove; 135-boss; 136-top wall; 150-sealing heat insulation piece; 151-via hole; 170-explosion-proof balance assembly; 180-first cold plate; 181-through hole; 183-fireproof coating; 184-flow channel groove; 185-cooling flow path; 186-insulating heat conduction piece; 187-water inlet; 188-water outlet; 189-box-penetrating joint; 190-second cold plate; 191-liquid-cooled flow channel; 192-liquid outlet; 193-liquid inlet; 194-sealing strip; 195-heat conduction piece; 200-cell; 210- cell body; 220-mounting part; 230-explosion-proof valve; 250-positive pole; 270-negative pole; and 300-battery pack.

### Detailed Description of the Embodiments

In order to make the purposes, technical solutions and advantages of the embodiments of the present invention clearer, the technical solutions in the embodiments of the present invention will be clearly and completely described in conjunction with the drawings in the embodiments of the present invention. It is apparent that the described embodiment are only a part of the embodiments of the present invention, and not all of them. Components of the embodiments of the present invention generally described and illustrated in the drawings herein may be arranged and designed in a variety of different configurations.

Therefore, the following detailed description of the embodiments of the present invention provided in the drawings is not intended to limit the scope of the claimed invention, but only represents the selected embodiments of invention. All other embodiments obtained by those of ordinary skill in the art on the basis of the embodiments in the present invention without creative work shall fall within the scope of protection of the present invention.

It is to be noted that: similar reference signs and letters refer to similar items in the following drawings, so that once a certain item is defined in one drawing, it does not need to be further defined and explained in the subsequent drawings.

In the description of the present invention, it is to be noted that the orientations or positional relationships indicated by the terms "upper", "down", "inside", "outside", etc. are based on the orientations or positional relationships shown in the drawings, or the orientations or positional relationships that are conventionally placed when the present invention product is used, and are only for the convenience of describing the present invention and simplifying the description. The description does not indicate or imply that the apparatus or element referred to must have a specific orientation, be constructed and operated in a specific orientation, and therefore cannot be construed as limiting the present invention.

In addition, the terms "first", "second" and the like are used for distinguishing the description only, and cannot be understood as indicating or implying relative importance.

It is to be noted that the features in the embodiments of the present invention may be combined with each other without conflict.

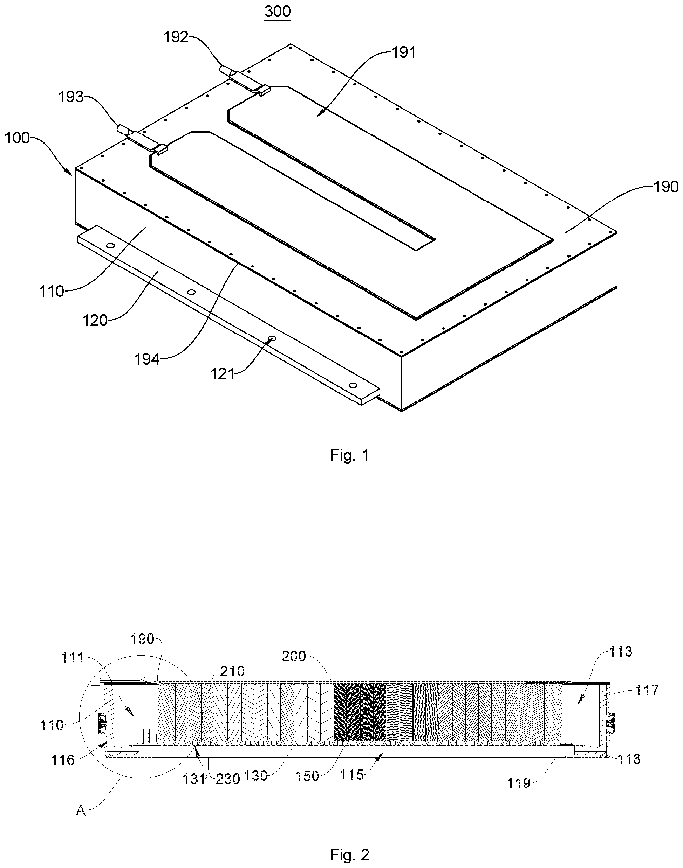

Referring to Fig. 1, Fig. 2, and Fig. 3, the embodiment provides a battery pack 300. The battery pack 300 includes a battery box assembly 100, a plurality of cells 200, and a bus bar (not shown in the figure) connected to the plurality of cells 200. The plurality of cells 200 are mounted in the battery box assembly 100, and are electrically connected through the bus bar. When thermal runaway occurs in one or more cells 200, the battery box assembly 100 is configured to guide hot airflow and liquid sprayed out from an explosion-proof valve 230 of the cell 200, so that the risk of thermal runaway of the whole battery pack 300 caused by thermal runaway in one cell 200 or the plurality of cells 200 is reduced.

In the embodiment, the battery box assembly 100 includes a box body 110 and a separator 130. The box body 110 has an accommodating space 111. The separator 130 is arranged in the accommodating space 111. The separator 130 is configured to divide the accommodating space 111 into a first region 113 and a second region 115. A vent hole 131 is provided in the separator 130, and the vent hole 131 is configured to connect the first region 113 and the second region 115. The first region 113 is configured to mount the cell 200. The vent hole 131 is arranged in a position corresponding to the explosion-proof valve 230 of the cell 200 mounted in the first region 113, the vent hole is configured to guide gas and liquid flowing from the explosion-proof valve 230 to the second region 115 in a case where the explosion-proof valve 230 of the cell 200 is opened.

In the embodiment, the separator 130 is arranged in the accommodating space 111 of the box body 110, and the accommodating space 111 is divided into the first region 113 and the second regions 115 which are independent of each other by using the separator 130. The vent hole 131 is provided in the separator 130, the cell 200 is mounted in the first region 113, and the explosion-proof valve 230 of the cell 200 corresponds to the vent hole 131, so that gas and liquid flows flowing from the explosion-proof valve 230 are guided to the second region 115 through the vent hole 131 in a case where thermal runaway occurs in the cell 200 and the explosion-proof valve 230 of the cell 200 is opened, and high-temperature airflow and high-temperature liquid are discharged from the first region 113 in time, thereby improving or avoiding the damage and influence of the high-temperature airflow and the high-temperature liquid on the cell 200 arranged in the first region 113 and insulation design in the first region 113.

It is to be noted that the insulation design includes, but is not limited to, an insulating layer for high-voltage connection, an insulating layer for low-voltage sampling, an insulating separator configured to ensure an insulating gap between a positive pole and a negative pole, etc.

In conjunction with Fig. 1, the box body 110 is further provided with a fixing plate 120, a mounting hole 121 is provided in the fixing plate, and the mounting hole 121 is configured to mount a fixing piece such as a bolt, a pin, or a screw, so as to fix the box body 110 to a frame or other components.

In the embodiment, the first region 113 is located above the second region 115. The first region 113 is arranged above the second region 115, so that in a case where thermal runaway occurs in the cell 200, the liquid and gas discharged from the explosion-proof valve 230 of the cell 200 are able to be conveniently discharged into the second region 115 below through the vent hole 131, and meanwhile, the problem that secondary damage to the cell 20 in the first region 113 caused by high-temperature liquid from the second region 115 flowing back to the first region 113 is avoided.

It is to be noted that the number of vent holes 131 is the same as the number of cells 200 arranged in the first region 113. The arrangement position of the vent hole 131 corresponds to the arrangement position of the cell 200 arranged in the first region 113. As long as it is ensured that the explosion-proof valve 230 of each or some cells 200 can connect to the second region 115 through the vent hole 131.

Of course, in some other embodiments of the present invention, the first region 113 and the second region 115 may also be arranged left and right. Or, the second region 115 is arranged above the first region 113. Or, the first region 113 is located at the upper left, and the second region 115 is located at the lower right. Or, the first region 113 is located at the lower left, and the second region 115 is located at the upper right, which is not specifically limited herein.

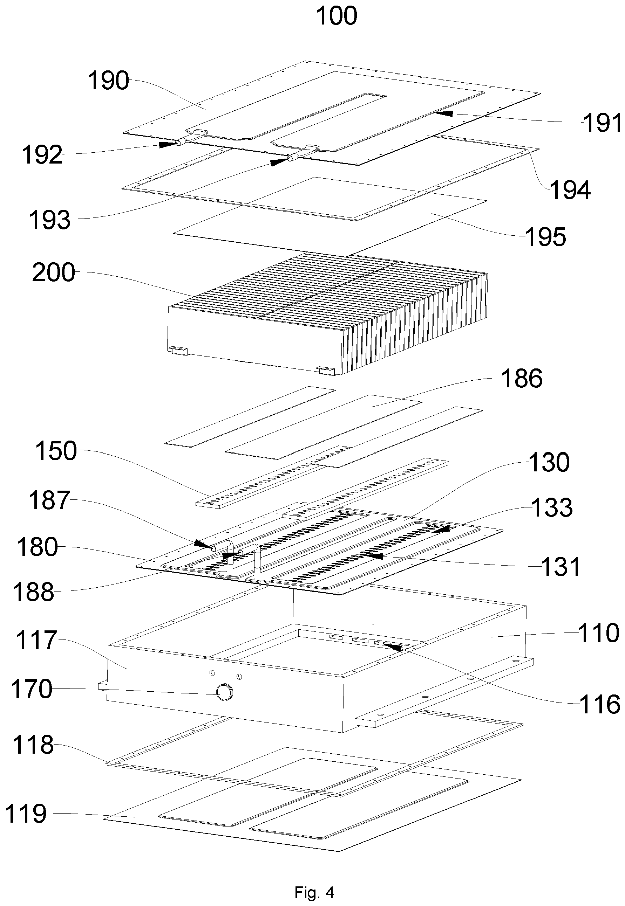

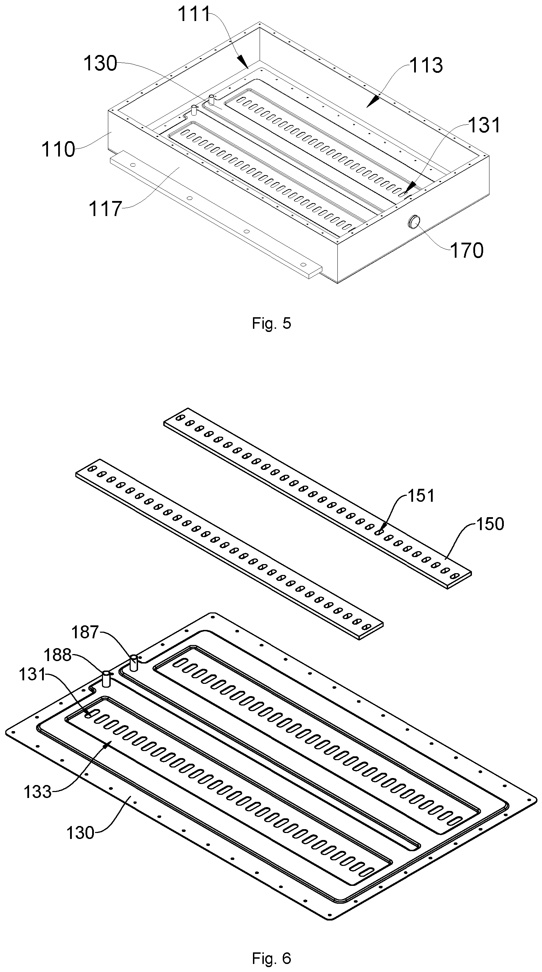

Referring to Fig. 4 and Fig. 5, in the embodiment, the box body 110 includes a frame 117, a sealing piece 118, and a bottom protection plate 119. The frame 117 is of a rectangular frame structure. The sealing piece 118 and the bottom protection plate 119 are sequentially mounted at a bottom of the frame 117 to form a seal to the bottom of the frame 117. The separator 130 is arranged in the frame 117, and the separator 130 is arranged parallel to the bottom protection plate 119. A region enclosed by the separator 130, the bottom protection plate 119, and the frame 117 is the second region 115. A region on an upper part of the separator 130 is the first region 113, that is, the side, away from the second region 115, of the separator 130 forms the first region 113.

Of course, in some other embodiments of the present invention, the structure of the frame 117 may also be in other shapes, for example, the frame 117 is of a cubic, elliptical, cylindrical, or irregular structure.

Referring to Fig. 4 and Fig. 6, in the embodiment, the battery box assembly 100 further includes a sealing heat insulation piece 150. The sealing heat insulation piece 150 is arranged on a side, located in the first region 113, of the separator 130, and is arranged on an outer periphery of the vent hole 131, and the sealing heat insulation piece 150 is configured for sealing and heat insulation between the separator 130 and the cell 200. The arrangement manner of the sealing heat insulation piece 150 is that after the cell 200 is mounted in the first region 113, an end surface of an end, provided with the explosion-proof valve 230, of the cell 200 abuts against the sealing heat insulation piece 150, so that the high-temperature liquid or gas may be prevented from flowing to other cells 200 from a space between the cell 200 and the separator 130 in a case where the explosion-proof valve 230 of the cell 200 is opened. In some embodiments, a thickness of the sealing heat insulation piece 150 is greater than a gap between the separator 130 and the cell 200, that is, the sealing heat insulation piece 150 has a certain compressibility to further improve the sealing performance after being assembled between the separator 130 and the cell 200, and block thermal runaway gas from flowing to the first region 113 above in a state of thermal runaway, thereby facilitating the convergence of the gas to the second region 115 at the bottom. The sealing heat insulation piece 150 is made of a fireproof material, and has the characteristic of high temperature resistance. The sealing heat insulation piece 150 may be formed by one or more of materials such as heat insulation cotton, heat insulation rubber, and a heat insulation adhesive. If the sealing heat insulation piece 150 uses fire insulation film cotton, it needs to have the performance of being able to withstand the temperature of more than 500°C and the thermal conductivity ≤0.05w/(mk).

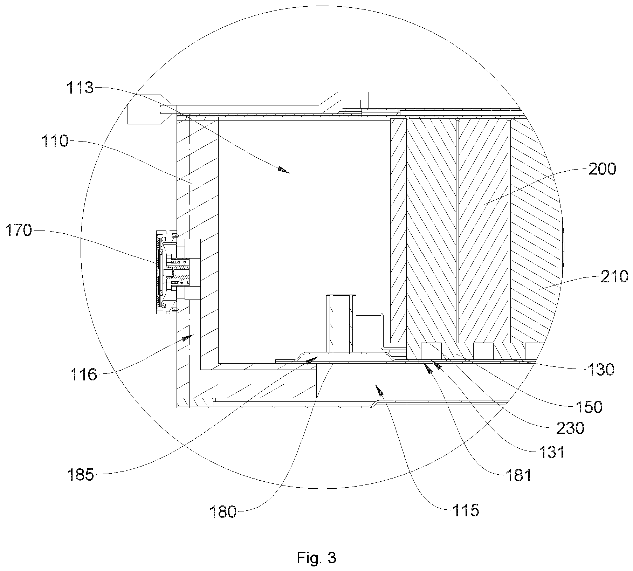

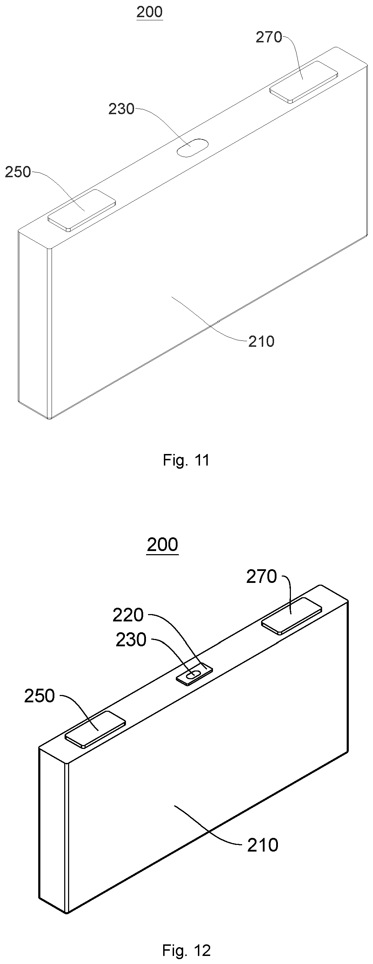

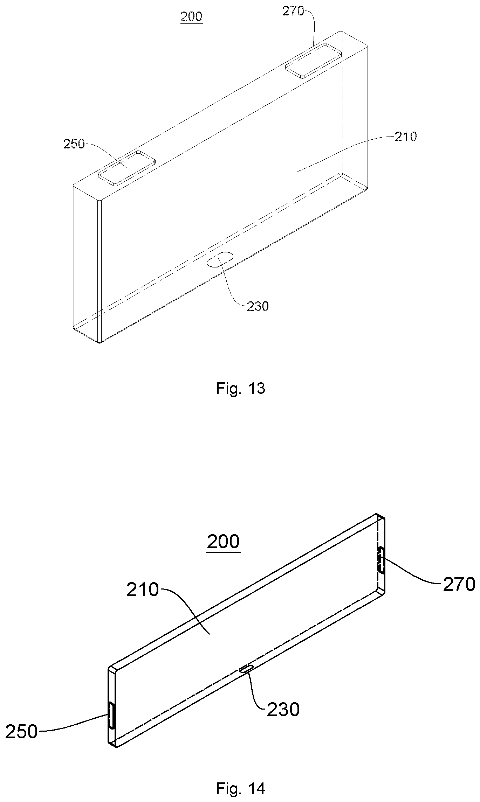

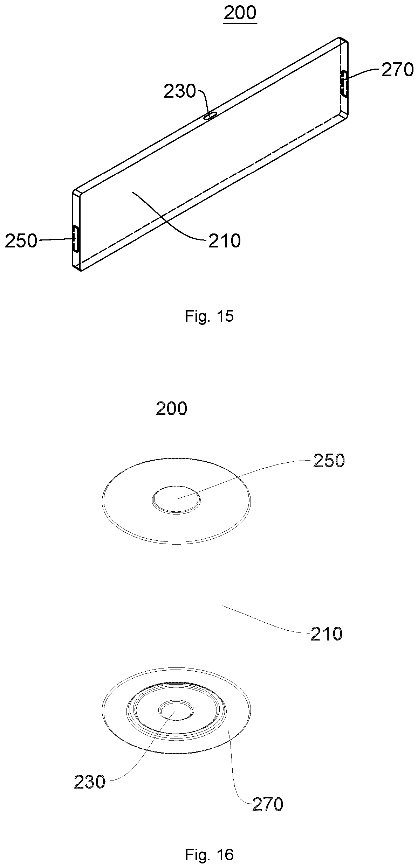

Referring to Fig. 3, and Fig. 11 to Fig. 16, the cell 200 includes a cell body 210, the explosion-proof valve 230, a positive pole 250, and a negative pole 270. The explosion-proof valve 230 is mounted on the cell body 210, and the explosion-proof valve 230 is able to be opened in a case where thermal runaway occurs in the cell 200, so that explosion caused by the internal pressure of the cell 200 is avoided. The positive pole 250 and the negative pole 270 are also mounted on the cell body 210, and the positive pole 250 and the negative pole 270 are configured to be connected to the bus bar or supply power to an electrical device.

In some embodiments of the present invention, the explosion-proof valve 230, the positive pole 250, and the negative pole 270 are arranged on the same side of the cell body 210. For example, the explosion-proof valve 230, the positive pole 250, and the negative pole 270 are arranged at a top of the cell body 210, and the positive pole 250 and negative pole 270 are located on both sides of the explosion-proof valve 230. When the cell 200 is mounted, the cell 200 is inverted in the first region 113, so that the top of the cell 200 abuts against the sealing heat insulation piece 150, and the explosion-proof valve 230 is aligned with the vent hole 131.

It is to be noted that, in some embodiments of the present invention, the negative pole 250, the negative pole 270, and the explosion-proof valve 230 on the cell body 210 may also be arranged on different sides of the cell 200. For example, the positive pole 250 and the negative pole 270 of the cell 200 are arranged at the top of the cell 200, and the explosion-proof valve 230 is arranged at the bottom of the cell 200. For another example, the positive pole 250 and the negative pole 270 are respectively arranged on two opposite sides of the cell 200, and the explosion-proof valve 230 is arranged at the top or bottom of the cell 200. Of course, the cell 200 may be a cylindrical, square or other shaped cell 200. In a case where the explosion-proof valve 230, the positive pole 250, and the negative pole 270 are not in the same plane, when the cell 200 is mounted, only the side, provided with the explosion-proof valve 230, of the cell 200 is arranged towards the separator 130, so that the side, provided with the explosion-proof valve 230, of the cell 200 abuts against the sealing heat insulation piece 150, and the explosion-proof valve 230 is aligned with the vent hole 131.

It is to be noted that the type of the cell 200 is not limited in the embodiment of the present invention, as long as the explosion-proof valve 230 is provided, and after the cell 200 is mounted, the explosion-proof valve 230 correspondingly connects to the vent hole 131. It is also to be noted that the corresponding arrangement or alignment arrangement of the vent hole 131 and the explosion-proof valve 230 may be that the explosion-proof valve 230 is aligned with or slightly offset from the vent hole 131 during actual arrangement, as long as it is ensured that the liquid and gas flowing from the explosion-proof valve 230 can be guided to the second region 115 through the vent hole 131. It is not limited here that the vent hole 131 must be aligned with the explosion-proof valve 230.

In some embodiments of the present invention, a size of the vent hole 131 is slightly greater than a size of the explosion-proof valve 230 of the cell 200, so that a mounting accuracy of the cell 200 is reduced, the cell 200 can be mounted more conveniently, and the mounting efficiency is improved.

Of course, in some other embodiments of the present invention, the vent hole 131 may also indirectly connect to the explosion-proof valve 230 of the cell 200 in a manner such as a pipeline, so that the gas or liquid discharged from the explosion-proof valve 230 of the cell 200 is discharged to the vent hole 131 through the pipeline, and then is guided from the first region 113 to the second region 115.

In some embodiments of the present invention, the cell body 210 is provided with a mounting part 220, and the explosion-proof valve 230 is mounted on the mounting part 220. The mounting part 220 and/or the explosion-proof valve 230 protrude/protrudes out of the cell body 210, and a part of the mounting part 220 and/or the explosion-proof valve 230 protruding out of the cell body 210 is configured to be inserted into the vent hole 131. The mounting part 220 and/or the explosion-proof valve 230 protrude/protrudes out of the cell body 210, so that the explosion-proof valve 230 of the cell 200 and the vent hole 131 may be aligned and mounted more conveniently during mounting, and the liquid may also be prevented from leaking into the first region 113. It may be understood that the mounting part 220 protrudes out of the cell body 210, or the explosion-proof valve 230 protrudes out of the cell body 210, or the mounting part 220 and the explosion-proof valve 230 both protrude out of the cell body 210.

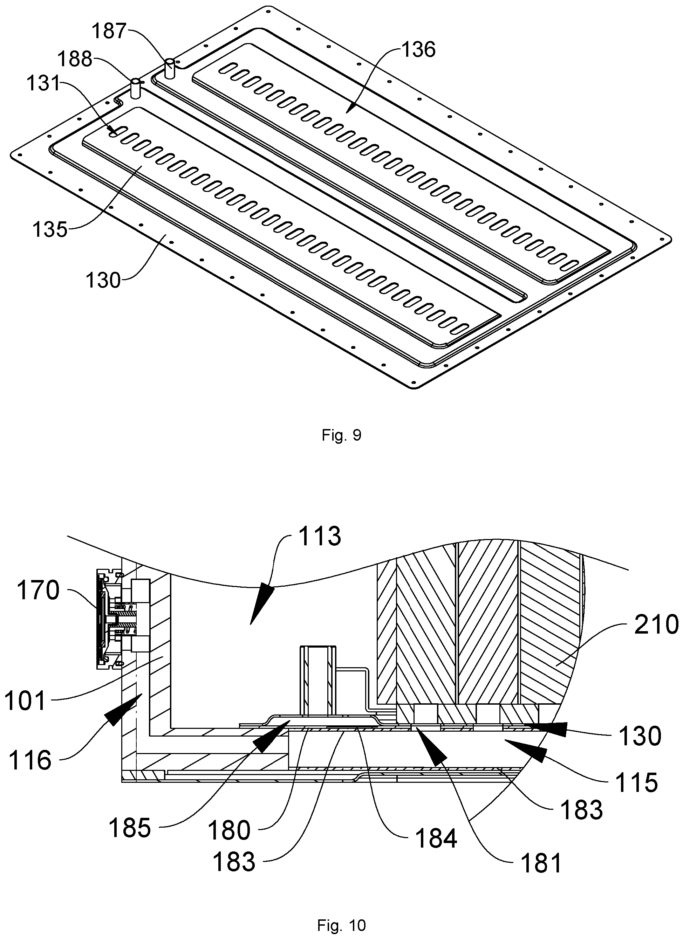

Referring to Fig. 3 to Fig. 10, since the explosion-proof valve 230 of the cell 200 is connected to the second region 115, in a case where thermal runaway occurs in the cell 200, the temperature and pressure of the second region 115 may increase sharply in a short time, which may lead to the explosion of the battery box assembly 100. In some embodiments, the battery box assembly 100 further includes an explosion-proof balance assembly 170. The explosion-proof balance assembly 170 is arranged in the box body 110, the explosion-proof balance assembly 170 is connected to the second region 115, and the explosion-proof balance assembly 170 is configured to balance the pressure of the second region 115. The box body 110 is provided with the explosion-proof balance assembly 170, so that the gas or liquid may be discharged outwards in a case where thermal runaway occurs in the cell 200 to achieve the purpose of reducing the pressure of the second region 115, thereby avoiding the explosion of the battery box assembly 100.

The explosion-proof balance assembly 170 may be a check valve with an explosion-proof exhaust function or a bidirectional valve with bidirectional balance pressure. The bidirectional valve may discharge gas to one of two sides according to the pressure, so that the gas or liquid in the second region 115 may be discharged, and in some cases, the bidirectional valve may also be opened to enable external air to enter the second region 115, thereby ensuring balance of an internal and external pressure difference. Of course, in some other embodiments of the present invention, the explosion-proof balance assembly 170 may also be a disposable explosion-proof valve plate. In the embodiment, the explosion-proof balance assembly 170 uses the bidirectional valve with the bidirectional balanced pressure.

In the embodiment, a side wall 101 of the box body 110 is provided with an airflow channel 116 connected to the second region 115, the explosion-proof balance assembly 170 connects to the second region 115 through the airflow channel 116, and the explosion-proof balance assembly 170 is arranged on the side wall 101 of the box body 110 corresponding to the first region 113. The explosion-proof balance assembly 170 is arranged on the side wall 101 of the box body 110 corresponding to the first region 113 and maintained at a certain height , so that the liquid or gas of the cell 200 flowing into the second region 115 due to thermal runaway is able to be stored in the second region 115, thereby increasing the storage capacity of the second region 115, and avoiding the corrosion to other parts, such as a chassis and a frame of an electric vehicle, after being discharged by the explosion-proof balance assembly 170. Secondly, the explosion-proof balance assembly 170 may also be prevented from being damaged by bounced stones and the like.

In the embodiment, the number of explosion-proof balance assemblies 170 is two, and the two explosion-proof balance assemblies 170 are arranged on two opposite side walls 101 of the box body 110. The two opposite side walls 101 of the box body 110 are respectively provided with the airflow channel 116, and the airflow channel 116 is configured to connect the explosion-proof balance assembly 170 to the second region 115.

Of course, in some other embodiments of the present invention, the explosion-proof balance assembly 170 may be arranged on the side wall 101 of the box body 110 corresponding to the second region 115, or a bottom wall of the box body 110. The number of explosion-proof balance assemblies 170 may be flexibly adjusted according to actual situations, for example, 1, 3, 4, 5, or more. In some embodiments, the frame 117 of the box body 110 may be made of an aluminum alloy material or other materials with good thermal conductivity, so that the airflow channel 116 may be enclosed by an aluminum alloy, and in a process that the high-temperature airflow and liquid flow are discharged from the second region 115 through the airflow channel 116 and the explosion-proof balance assembly 170, the aluminum alloy is able to cool the high-temperature airflow and liquid flow, so that the airflow or the liquid flow discharged out of the box body 110 does not burn an adjacent vehicle or pedestrian.

In the embodiment, an air pressure balance valve (not shown in the figure) connecting to the first region 113 is further provided on the box body 110, and the air pressure balance valve is configured to balance the pressure between the first region 113 and an external of the battery pack 300.

Referring to Fig. 5 to Fig. 7, in the embodiment, a groove 133 recessed in a direction toward the second region 115 is provided in the side, close to the first region 113, of the separator 130, a notch of the groove 133 is toward the first region 113, and the vent hole 131 is arranged at a bottom of the groove 133. The sealing heat insulation piece 150 is arranged in the groove 133. Via holes 151 in one-to-one correspondence with the vent holes 131 are provided in the sealing heat insulation piece 150. The groove 133 plays a role in positioning and limiting the sealing heat insulation piece 150, which improves the mounting accuracy and mounting efficiency of the sealing heat insulation piece 150, so that the sealing heat insulation piece 150 and the separator are better attached, abut against each other more tightly, and have better sealing performance, so as to be conductive to preventing the high-temperature liquid or gas from flowing to other cells 200 from the space between the cell 200 and the separator 130, thereby avoiding the aggravation of thermal diffusion.

Of course, in some other embodiments of the present invention, a boss 135 may also protrude out of the side, close to the first region 113, of the separator 130. The vent hole 131 is formed in the boss 135, and penetrates through the boss 135. The sealing heat insulation piece 150 is arranged on a top wall 136 of the boss 135, that is, the sealing heat insulation piece 150 is arranged on a side, away from the separator 130, of the boss 135.

In the embodiment, the groove 133 or the boss 135 is provided, so that an avoidance space with a height difference is formed on both sides of the explosion-proof valve 230, thereby facilitating the mounting and insulation design of the bus bar.

Since the hot airflow or liquid discharged into the second region 115 may transfer heat to the cell 200 in the first region 113 in a heat transfer manner, heat may also be generated during the charging and discharging process of the cell 200 and the bus bar with the development of quick charging technology. In the embodiment, the battery box assembly 100 further includes a first cold plate 180. The first cold plate 180 is arranged on the side, close to the second region 115, of the separator 130, the first cold plate 180 is configured to cool the first region 113 and the second region 115, and a through hole 181 corresponding to the vent hole 131 is provided in the first cold plate 180.

In the embodiment, the first cold plate 180 is provided, the first cold plate 180 is arranged on the side, close to the second region 115, of the separator 130, and after the gas flowing from the through hole 181 and the vent hole 131 rises according to a hot airflow rising principle, the gas is in contact with the first cold plate 180, so that the cooling of the second region 115 is achieved. Secondly, the first cold plate 180 may also cool electronic components such as the cell 200 and the bus bar arranged in the first region 113 through the separator 130, so as to maintain a normal operation of the battery pack 300.

In the embodiment, the first cold plate 180 and the separator 130 are respectively provided with a flow channel groove 184, and the first cold plate 180 is partially attached to the separator 130, so that the flow channel groove 184 forms a closed cooling flow path 185. That is, heat dissipation is performed in a manner of taking away heat through liquid flow, so that heat may be dissipated in the first region 113 and the second region 115 at the same time, and the heat dissipation performance is good.

In the embodiment, the first cold plate 180 and the flow channel groove 184, the vent hole 131, and the through hole 181 on the separator 130 may be formed by stamping, and the two are welded together after being stamped, so that the flow channel groove 184 forms the cooling flow path 185. Secondly, a water inlet 187 and a water outlet 188 connecting to the cooling flow path 185 are provided in the first cold plate 180 or the separator 130. A cooling medium is circularly cooled in the cooling flow path 185 by using a water pump or the like. In a case where the cell 200 is mounted in the first region 113, the first cold plate 180 is provided on the separator 130, so that heat exchange between the cell 200 and the cooling medium in the cooling flow path 185 may be better achieved, and the structural strength of the separator 130 may also be enhanced, thereby improving the bearing capacity of the separator 130 and saving more materials. Of course, in some embodiments of the present invention, an insulating heat conduction piece 186 is arranged between the separator 130 and the cell 200, the insulating heat conduction piece 186 may be a thermally conductive adhesive, and the separator 130 may exchange heat with the bus bar connected with the cell 200 by providing the thermally conductive adhesive, so that other components and parts of the battery pack 300 may also be cooled while the cell 200 is cooled by using the cooling medium. In some embodiments, the water inlet 187 and the water outlet 188 are respectively connected to a box-penetrating joint 189, which facilitates the filling of the cooling medium outside the box body 110, thereby facilitating the circulating flow of the cooling medium.

In some embodiments of the present invention, the first cold plate 180 and the separator 130 may also be integrally formed, and have the cooling flow path 185 therebetween. For example, casting, 3D printing, extrusion molding, or other manners are used.

Of course, in some other embodiments of the present invention, the first cold plate 180 may also be another type of cooling element, such as a semiconductor refrigeration piece. Or, the separator 130 and the first cold plate 180 are independent of each other, and the first cold plate 180 may exchange heat with the separator 130 and the second region 115. Or, the separator 130 is made of a refrigeration element, which no longer needs to be additionally provided with the first cold plate 180.

In the embodiment, the side, close to the first region 113, of the separator 130 is attached to the thermally conductive adhesive, and the thermally conductive adhesive may improve the heat exchange efficiency between the cell 200 and the separator 130, so that the cell 200, the bus bar, and other parts can better exchange heat with the separator 130, thereby improving the heat exchange efficiency.

In some embodiments of the present invention, a part of liquid may also be filled into the second region 115, the liquid may be water or a liquid chemical agent, and after the high-temperature liquid flows into the second region 115 due to thermal runaway in the cell 200, the high-temperature liquid directly falls into low-temperature liquid in the second region 115, thereby cooling the high-temperature liquid and preventing the damage of the high-temperature liquid to the bottom protection plate 119. In a case where the second region 115 is filled with the liquid chemical agent, the chemical agent may be determined according to the liquid that flows out from the explosion-proof valve 230 of the cell 200. For example, the liquid flowing out of the explosion-proof valve 230 of the cell 200 may react with the liquid chemical agent to absorb heat, so as to achieve cooling. Or, the liquid flowing out of the explosion-proof valve 230 of the cell 200 may react with the liquid chemical agent to form a corrosion-free and environment-friendly product, so that the corrosion to the bottom protection plate 119 or the side wall 101 of the box body 110 may be prevented while cooling, so as to prolong a service life of the battery pack 300.

In addition, in some embodiments of the present invention, the chemical reagent or a cooling fire extinguishing agent may also be encapsulated in a sealed container, and the sealed container with the chemical reagent or the cooling fire extinguishing agent is arranged in the second region 115, and a detection sensor is arranged in the second region 115. When the sensor detects that the temperature of the second region 115 exceeds a preset temperature or a preset condition, the sealed container with the chemical reagent or the cooling fire extinguishing agent may be opened, so that cooling of the second region 115 and the cell is achieved, and thermal diffusion of the battery pack 300 is avoided or reduced. The sensor may be a temperature sensor or a pressure sensor, or may be a harmful gas sensor, or a combination of a plurality of sensors.

In the embodiment, a surface of a side, close to the separator 130, of the bottom protection plate 119 is coated with a fireproof thermal insulation material. Optionally, the surface of the bottom protection plate 119 is provided with a fireproof coating 183, which has the characteristics of fire resistance and high temperature resistance. A surface of the first cold plate 180 is provided with the fireproof coating 183, and the part of the frame 117 corresponding to the second region 115 is further provided with the fireproof coating 183, so that the fireproof and thermal insulation performance of the second region 115 are improved, and the risk of thermal diffusion is reduced.

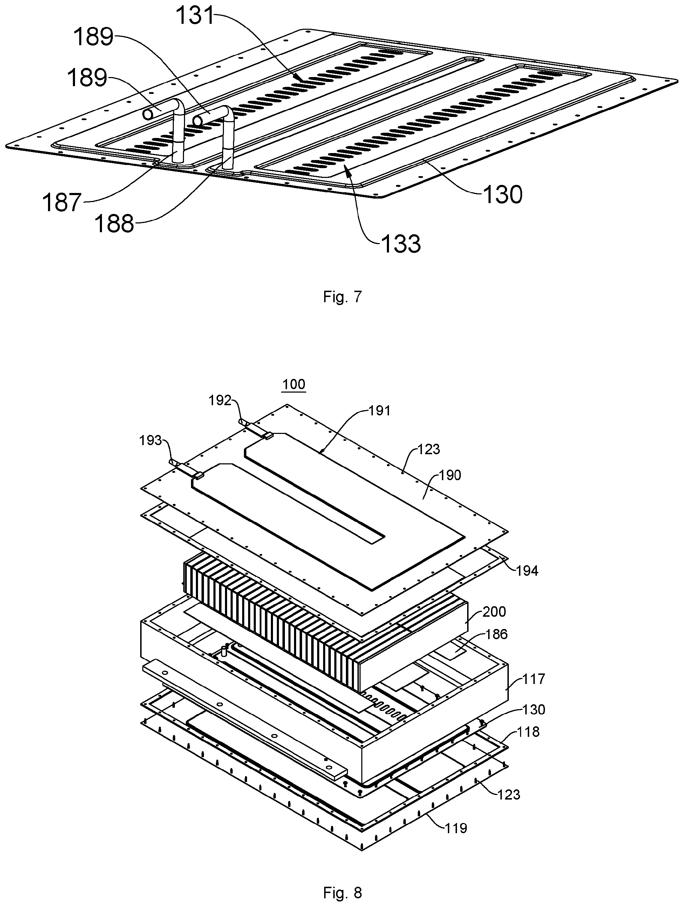

In conjunction with Fig. 8, a fixing piece 123 is provided on the bottom protection plate 119, and the fixing piece 123 is configured to connect the bottom protection plate 119 and the frame 117 to improve the structural strength. In some embodiments, the sealing piece 118 is arranged between the bottom protection plate 119 and the frame 117, the fixing piece 123 sequentially passes through the bottom protection plate 119, the sealing piece 118, and the frame 117 to fixedly connect the three, and the fixing piece 123 may be a screw or a bolt.

In the embodiment, the battery box assembly 100 further includes a second cold plate 190. The second cold plate 190 is arranged in the first region 113, and opposites to the first cold plate 180. The second cold plate 190 is configured to cool the side, away from the first cold plate 180, of the cell 200.

In some embodiments, the second cold plate 190 is a liquid-cooled cold plate, in which a liquid-cooled flow channel 191 and a liquid outlet 192 and a liquid inlet 193 which connect to the liquid-cooled flow channel 191 are provided, and flowing heat exchange of the cooling medium is achieved through the liquid inlet 193, the liquid outlet 192, and the liquid-cooled flow channel 191.

In the embodiment, the second cold plate 190 is mounted at the top of the box body 110, and is further configured as a cover of the box body 110 to seal the first region 113, that is, the first region 113 is jointly enclosed by the second cold plate 190, the separator 130, and the frame 117. A sealing strip 194 configured for sealing is further arranged between the second cold plate 190 and the frame 117 of the box body 110. A heat conduction piece 195 is arranged on a side, abutting against the cell 200, of the second cold plate 190, and the heat conduction piece 195 may be the thermally conductive adhesive or other heat conducting elements, so that the second cold plate 190 can better exchange heat with the cell 200.

In some embodiments, a fixing piece 123 is provided on the second cold plate 190, and the fixing piece 123 is configured to connect the second cold plate 190 and the frame 117 to improve the structural strength. In some embodiments, the sealing strip 194 is arranged between the second cold plate 190 and the frame 117, the fixing piece 123 sequentially passes through the second cold plate 190, the sealing piece 194, and the frame 117 to fixedly connect the three, and the fixing piece 123 may be a screw or a bolt.

In summary, the battery box assembly 100, the cell 200, and the battery pack 300 provided by the embodiments of the present invention have the following working principle and beneficial effects.

In the embodiments of the present invention, the separator 130 is arranged in the accommodating space 111 of the box body 110, the accommodating space 111 is divided into the first region 113 and the second region 115 which are independent of each other by using the separator 130, the vent hole 131 is provided in the separator 130, and after the cell 200 is mounted in the first region 113, the explosion-proof valve 230 of the cell 200 corresponds to the vent hole 131, so that gas and liquid flows flowing from the explosion-proof valve 230 are guided to the second region 115 through the vent hole 131 in a case where thermal runaway occurs in the cell 200 and the explosion-proof valve 230 of the cell 200 is opened, and high-temperature airflow and high-temperature liquid are isolated from the first region 113, thereby improving or avoiding the damage and influence of the high-temperature airflow and the high-temperature liquid on the cell 200 arranged in the first region 113 and insulation design in the first region thereof 113.

The above is only the specific implementation of the present invention and not intended to limit the scope of protection of the present invention. Any variations or replacements apparent to those skilled in the art within the technical scope disclosed by the present invention shall fall within the scope of protection of present invention. Therefore, the scope of protection of the present invention shall be subject to the scope of protection of the claims.

### Industrial Applicability

A battery box assembly, a cell, and a battery pack of some embodiments of the present invention can reduce the damage of high-temperature liquid flow and airflow flowing out of an explosion-proof valve to a cell pole in the battery pack, the insulation design and the like in a state of thermal runaway in some cells, reduce the risk of thermal runaway affecting other cells, slow down thermal diffusion, and relieve the destructiveness of thermal runaway.

## Claims

1. A battery box assembly, configured to accommodate a cell, wherein the battery box assembly comprises a box body and a separator, wherein the box body has an accommodating space, and the separator is arranged in the accommodating space; the separator is configured to divide the accommodating space into a first region and a second region; a vent hole is provided in the separator, and the vent hole is configured to connect the first region to the second region; the first region is configured to mount the cell; and the vent hole is arranged in a position corresponding to an explosion-proof valve of the cell, the vent hole is configured to guide gas and liquid flows flowing from the explosion-proof valve to the second region in a case where the explosion-proof valve of the cell is opened.

2. The battery box assembly as claimed in claim 1, wherein the first region is located above the second region.

3. The battery box assembly as claimed in claim 1 or 2, further comprising a sealing heat insulation piece, wherein the sealing heat insulation piece is arranged on a side, located in the first region, of the separator, and is arranged on an outer periphery of the vent hole, and the sealing heat insulation piece is configured for sealing and heat insulation between the separator and the cell.

4. The battery box assembly as claimed in claim 3, wherein a thickness of the sealing heat insulation piece is greater than a gap between the separator and the cell.

5. The battery box assembly as claimed in any one of claims 1 to 4, further comprising an explosion-proof balance assembly, wherein the explosion-proof balance assembly is arranged in the box body, the explosion-proof balance assembly connects to the second region, and the explosion-proof balance assembly is configured to balance a pressure of the second region.

6. The battery box assembly as claimed in claim 5, wherein the first region is located above the second region, a side wall of the box body is provided with an airflow channel connecting to the second region, and the explosion-proof balance assembly connects to the second region through the airflow channel;
the explosion-proof balance assembly is arranged on a side wall of the box body corresponding to the second region; and/or,
the explosion-proof balance assembly is arranged on a side wall of the box body corresponding to the first region.

7. The battery box assembly as claimed in any one of claims 1 to 6, wherein a groove recessed in a direction toward the second region is provided in a side, close to the first region, of the separator, and the vent hole is arranged at a bottom of the groove; or,
a boss protrudes out of a side, close to the first region, of the separator, and the vent hole is formed in a top wall of the boss.

8. The battery box assembly as claimed in any one of claims 1 to 7, further comprising a first cold plate, wherein the first cold plate is arranged on a side, close to the second region, of the separator, the first cold plate is configured to cool the first region and the second region, and a through hole corresponding to the vent hole is provided in the first cold plate.

9. The battery box assembly as claimed in claim 8, wherein the first cold plate is provided with a flow channel groove, and the first cold plate is partially attached to the separator, so that the flow channel groove forms a cooling flow path.

10. The battery box assembly as claimed in claim 9, wherein a water inlet and a water outlet which connect to the cooling flow path are provided in the first cold plate and/or the separator.

11. The battery box assembly as claimed in any one of claims 8 to 10, wherein the first cold plate and the separator are integrally formed.

12. The battery box assembly as claimed in any one of claims 8 to 11, wherein a surface of the first cold plate is provided with a fireproof coating.

13. The battery box assembly as claimed in any one of claims 1 to 12, wherein the box body comprises a bottom protection plate, wherein the bottom protection plate and the separator are oppositely arranged, and the second region is formed between the bottom protection plate and the separator; and a surface of the bottom protection plate is provided with a fireproof coating.

14. The battery box assembly as claimed in any one of claims 1 to 13, wherein an insulating heat conduction piece is arranged between the separator and the cell.

15. The battery box assembly as claimed in any one of claims 1 to 14, further comprising a second cold plate, wherein the second cold plate is arranged in the first region, and the second cold plate is configured to cool a side, away from the separator, of the cell.

16. The battery box assembly as claimed in claim 15, wherein a heat conduction piece is arranged between the second cold plate and the cell.

17. A cell, applied to the battery box assembly as claimed in any one of claims 1 to 16, comprising a cell body and the explosion-proof valve, wherein the cell body is provided with a mounting part, the explosion-proof valve is mounted on the mounting part, the mounting part and/or the explosion-proof valve protrude/protrudes out of the cell body, and a part of the mounting part and/or the explosion-proof valve protruding out of the cell body is configured to be inserted into the vent hole.

18. A battery pack, comprising the battery box assembly as claimed in any one of claims 1 to 16 and/or the cell as claimed in claim 17.
